(19) **Europäisches Patentamt**

**European Patent Office**

**Office européen des brevets**

(11) **EP 0 573 406 B1**

(12) **EUROPEAN PATENT SPECIFICATION**

(45) Date of publication and mention
of the grant of the patent:
**04.06.1997 Bulletin 1997/23**

(51) Int Cl.⁶: **H04H 1/00**, H04N 7/167,
G11B 27/36

(21) Application number: **90912498.4**

(22) Date of filing: **23.08.1990**

(86) International application number:
**PCT/AU90/00370**

(87) International publication number:
**WO 91/03112 (07.03.1991 Gazette 1991/06)**

(54) **PROGRAM TRANSMISSION OPTIMISATION**

OPTIMISIERUNG EINER PROGRAMMÜBERTRAGUNG

OPTIMISATION DE LA TRANSMISSION DE PROGRAMMES

(84) Designated Contracting States:
**AT BE CH DE DK ES FR GB IT LI LU NL SE**

(30) Priority: **23.08.1989 AU 5933/89**

(43) Date of publication of application:
**15.12.1993 Bulletin 1993/50**

(73) Proprietor: **DELTA BETA PTY. LTD.**
**Fremantle, W.A. 6160 (AU)**

(72) Inventor: **DE BEY, Henry, Curtis**
**Cottesloe, W.A. 6011 (AU)**

(74) Representative: **Brunner, Michael John**
**GILL JENNINGS & EVERY**
**Broadgate House**
**7 Eldon Street**
**London EC2M 7LH (GB)**

(56) References cited:
EP-A- 0 128 769         EP-A- 0 343 930
US-A- 4 593 318         US-A- 4 682 360
US-A- 4 821 101         US-A- 4 847 690
US-A- 4 849 817         US-A- 4 887 152

- **PATENT ABSTRACTS OF JAPAN vol. 11, no. 138
(E-503) 2 May 1987 & JP-A-61 276 497**
- **PATENT ABSTRACTS OF JAPAN vol. 11, no. 62
(P-551) 25 February 1987 & JP-A-61 224 057**

**Description**

FIELD OF THE INVENTION

The present invention relates to a system and method for program transmission optimisation over a distribution system and relates particularly, though not exclusively, to such a method and system for supplying video-on-demand over a cable television network.

DISCUSSION OF THE PRIOR ART

Throughout the following specification the word "program" should be understood in the broadest sense of the term and includes any information, whether visual or audible, a mixture of both or otherwise, which is normally perceived in a substantially continuous sequence of impressions through one or more of the human senses. The term "video program" refers to a program of visual information or visual and audible information, whether recorded in reproducible format or transmitted "live". In our "information society", with its increasing emphasis on greater accessibility to information, there are many situations where the same program may be required to be accessed by more than one person at the same time.

Thus, for example, in a library of a large educational institution which stores lectures and other information on audio and/or video cassettes, the demand for certain programs may be particularly high at certain times and there is a need to be able to allow several students to listen to or view the program simultaneously from the beginning, without having to force individuals to start listening to or viewing the program at the same time. Ideally, it should be possible to service the needs of all persons requiring that program immediately when it is requested. In practice this is extremely difficult without expensive duplication of equipment and complex electronic processing. Another example of this type of multiple user situation is so called video-on-demand television. A video-on-demand system ideally allows any subscriber to request (demand) any particular video program at any time of the day.

A prior art video-on-demand system is described in U.S. 4,506,387 to Walter in which each video program is preprogrammed in a memory device selectable by a host computer at a central data station in response to an address signal transmitted from the user. The host computer controls the transmission of the video program at a high non-real-time rate over a fibre optic line network to a data receiving station at the users location. The data receiving station then converts the received optical data to electrical data and stores it for subsequent real-time transmission to the users television set.

There are a number of significant disadvantages with the system of Walter, the foremost being that it is incompatible with existing television transmission networks, and in particular CATV coaxial cable networks. In order to achieve a rapid response time Walter transmits all of the digital data corresponding to an entire program to the receiving station over a plurality of fibre optic lines within' a very short time. Even with compression of the digital data the bandwidth requirement for this system is relatively large. For example, sixteen (16) optical data channels over four fibre optic lines are required to transmit a two hour movie in about thirty one seconds. Very few homes or buildings currently have ready access to a fibre optic cable, and a fibre optic network is expensive to install.

A further disadvantage with the system of Walter is that it cannot adequately handle a high demand for the same video program. Research in video tape lending libraries indicates that out of a total of say five thousand tapes held in the library, at any one time only a core group of twenty to forty most popular titles are in high demand. Furthermore, this research into the viewing habits of viewers indicates that the core video demand requirement varies throughout the day as the nature of the viewers changes. Whilst Walter contemplates that the central data station may transmit only a portion of the selected program to the user for his viewing, and then begin transmitting a portion of another selected program to a second user, the system cannot simultaneously handle several users requesting the same program. In that event, a user must wait until transmission of the entire program to each user who placed a request prior to his own has been completed, before the system can attend to his demand. Clearly with core video programs this could result in unacceptable delays.

SUMMARY OF THE INVENTION

The present invention was developed with a view to providing a method and system for program transmission optimisation over a distribution system for multiple users, and was developed specifically, though not exclusively, with a view to providing a system and method for supplying video-on-demand which is compatible with existing video distribution systems such as CATV. Throughout this specification the term "distribution system" is to be construed in the broadest sense of the term and covers ordinary radio and television networks, CATV and internal television/video/audio distribution systems of the kind employed in hotels, educational institutions and more recently in aircraft and ocean liners.

According to one aspect of the present invention there is provided a method for optimising transmission of a program to multiple users over a distribution system, the method comprising: at a head end of the distribution system,

providing the program divided into a plurality of program segments; and,
transmitting the program segments in a redundant sequence in accordance with a scheduling algorithm;

and at a receiver of the distribution system,
storing the transmitted program segments in a buffer storage means in the receiver for subsequent playback whereby, in use, said scheduling algorithm can ensure that a user's receiver will receive all of the program segments in a manner that will enable continuous playback in real time of the program.

Preferably the method further comprises selecting a Maximum Response Time (MRT) corresponding to a maximum time a user need wait to commence playing a requested program.

Typically the step of dividing the program involves dividing the program into segments of a length selected such that at least one segment can be transmitted in the time of one MRT.

In the preferred embodiment said step of transmitting the segments involves transmitting one or more segments during each MRT, including a first segment corresponding to a first segment of playing time of the program, in accordance with the scheduling algorithm whereby, in use, the first segment is always available at a receiver within one MRT for immediate playback.

According to another aspect of the present invention there is provided a system for optimising transmission of a program to multiple users, the system comprising: at a head end of the system:

means for providing the program divided into a plurality of
program segments; and,
means for transmitting the program segments in a redundant sequence in accordance with a scheduling algorithm;

and at a receiver of the system,
buffer storage means for storing the transmitted program segments for subsequent playback on the receiver whereby, in use, said scheduling algorithm can ensure that the receiver will receive all of the program segments in a manner that will enable continuous playback in real time of the program at the receiver.

Preferably the system further comprises at the head end of the system:
means for numbering the program segments 1 to n, where n equals the number of segments into which the program is divided, and wherein the segments are numbered in the order in which they should appear in the program for normal playback.

According to a further aspect of the present invention there is provided a receiver for receiving a program supplied by a program transmission optimisation system, the receiver comprising:

buffer storage means for storing a plurality of program segments of the program transmitted from a head end of the system according to a scheduling algorithm; and,
processing means for processing said program segments stored in the buffer storage means and supplying the segments in the correct sequence for playback whereby, in use, said scheduling algorithm can ensure that the receiver will receive all of the program segments in a manner that will enable continuous playback in real time of the program at the receiver.

Typically said processing means comprises means for distinguishing received program segments by a segment identifier, wherein said segment identifier at least identifies a segment by its number whereby, in use, the receiver can distinguish redundant segments from segments required for subsequent playback.

According to a still further aspect of the present invention there is provided a scheduling apparatus for a program transmission optimisation system, the apparatus comprising:

means for providing the program divided into a plurality of program segments;
means for scheduling said plurality of program segments in a redundant sequence in accordance with a scheduling algorithm; and,
means for routing said scheduled program segments for transmission to one or more receivers of users requesting the program whereby, in use, said scheduling algorithm can ensure that a user's receiver will receive all of the program segments in a manner that will enable continuous playback in real time of the program.

Preferably said means for dividing divides the program into segments of a length selected such that at least one segment can be transmitted in a Maximum Response Time (MRT) time interval, wherein MRT corresponds to a maximum time a user need wait to commence playing a requested program from its beginning.

The scheduling algorithm preferably employed in the invention involves iteratively calculating during each MRT the result of COUNT Modulo X= Y, wherein COUNT = a predetermined initial whole number incremented by 1 each MRT, X=1 to n, where n = the number of segments into which the program has been divided, whereby, in use, wherever Y=0 the program segment number X will be transmitted.

## BRIEF DESCRIPTION OF DRAWINGS

In order to facilitate a better understanding of the nature of the invention a detailed description of one preferred embodiment of a program transmission optimisation system and method in the form of a video-on-demand system and method will now be given, by way of example only, with reference to the accompanying drawings, in which:

Figure 1 is a schematic diagram of a preferred embodiment of a video-on-demand system;
Figure 2 is a more detailed block diagram illustrating the functional blocks of the video-on-demand system in Figure 1 applied to a CATV network;
Figure 3 is a flow chart of the method steps employed at a head end of the video-on-demand system;
Figure 4 is a flow chart of the method steps employed at a receiver of the video-on-demand system;
Figure 5 is a tabular representation of the transmission sequence of video segments in accordance with a preferred scheduling algorithm; and,
Figure 6 is a graphical representation of the relationship between Maximum Response Time and the required video-hours/hour of transmission time.

## DETAILED DESCRIPTION OF A PREFERRED EMBODIMENT

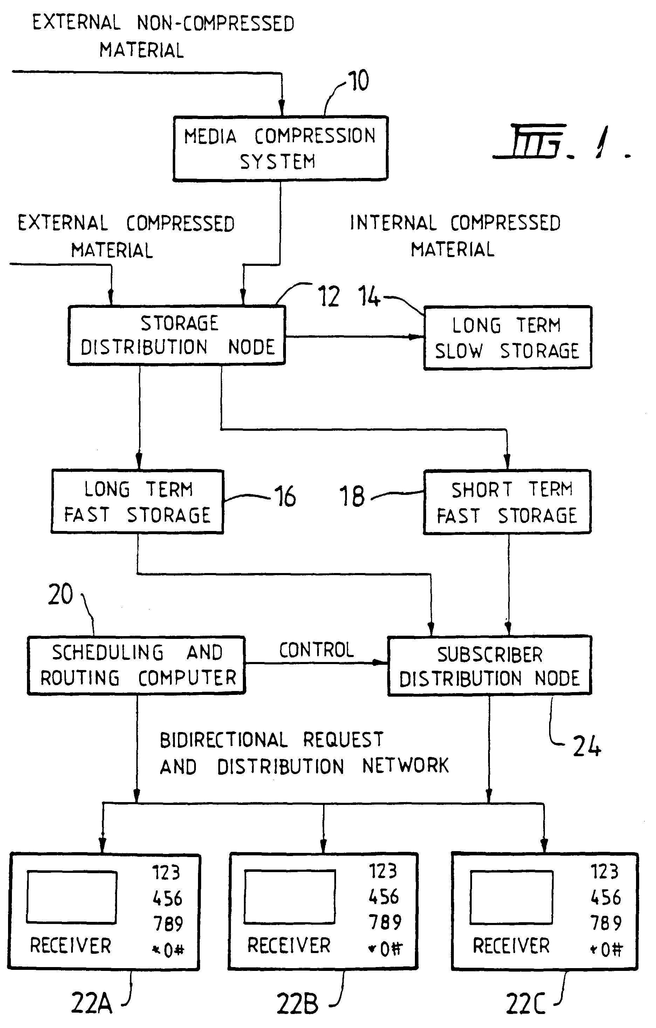

Figure 1 illustrates schematically a preferred embodiment of the video-on-demand system according to the present invention. Referring to Figure 1, external non-compressed material can enter the system in its most basic format such as 35mm film, video tape, or through a telecommunications link such as broadcast television or satellite transmission. The non-compressed material is passed through a media compression system 10 for compressing the audio visual program material into a compressed format. The audio visual program material may be compressed by an external video compression service provider, such as Intel Corporation. Such external compressed material may enter the system directly via a storage distribution node 12. The storage distribution node 12 routes the compressed video material to the appropriate storage medium.

There are three types of storage in the system, long term slow storage 14, long term fast storage 16 and short term fast storage 18. The division of the storage of compressed video material into the different types of storage is based on commercial considerations, in view of the relatively high cost of fast storage media compared to slow storage media. The selection of the type of storage to which different programs would be routed is based upon the expected future demand for the video material concerned. Daily news segments would probably be stored in short term fast storage 16, whereas a movie classic such as "Gone With The Wind" would probably be stored in long term fast storage 16. Infrequently requested materials such as some obscure silent movie would probably be stored in long term slow storage 14. The storage distribution node 12 is typically a micro or mini computer which controls the flow of data between the different storage devices.

The long term slow storage 14 typically takes the form of storage media such as magnetic tapes, or optical discs and may require human intervention for retrieval of infrequently accessed program material. The long term fast storage 16 may typically take the form of a jukebox type of optical disc storage device. Optical disc storage provides high density storage with random access, and the jukebox access mechanism provides automatic program access. A typical unit currently available is the KODAK Optical Disc System 6800 drive/cabinet. The short term fast storage 18 may take the form of a magnetic disc drive such as an IBM Model 3380. This allows rapid random access to the compressed video material stored in digital format, but is a relatively expensive storage medium and would therefore only be used for storing popular core video programs.

The scheduling and routing computer 20 receives requests for specific audio visual material from user's receivers 22A, 22B or 22C via a bi-directional request and distribution network. The scheduling and routing computer 20 controls the retrieval and division of the selected video program in a plurality of video segments, schedules the video segments in accordance with a scheduling algorithm and controls the routing of the scheduled segments for transmission to one or more of the receivers 22A, 22B or 22C, so that each requesting viewer's receiver will receive all of the video segments in a manner that will enable continuous immediate viewing of the program. The video-on-demand system employs a combination of frequency multiplexing and time division multiplexing. The time division multiplexing of the video segments is controlled by the scheduling and routing computer 20 in accordance with the scheduling algorithm. The frequency multiplexing is performed by a subscriber distribution node 24 under the control of the scheduling and routing computer 20. The processing capabilities of the scheduling and routing computer 20 are similar to that required by computers used by banks for automatic teller machines. The scheduling and routing computer 20 may be any suitable computer with a typical processing capability of 1.5 to 200 million instructions per second (MIPS), depending on the size of the subscriber base and other loading factors.

The viewer's receivers 22 are typically frequency agile, to be compatible with the frequency multiplexing employed at the head end of the system. The receivers are provided with processing means to capture the appropriate data packets created by the time division multiplexing of the video segments. The receivers 22 are also provided with buffer storage means for storing the received video segments, and would typically also comprise decompression means for decompressing the video data for subsequent display on a dedicated television screen, or fed into a conventional television set.

The video-on-demand system of Figure 1 can operate on either analog or digital communication circuits, however in the preferred embodiment described below the video distribution system is a conventional cable television system which is analog. In the preferred embodiment of the system described below primarily modulated digital data is transmitted over the CATV network. However, it is envisaged that a future system will employ a mixture of analog and modulated digital signals.

The method of program transmission optimisation according to the invention can provide transmission optimisation for either digital or analog information signals.

Conventional CATV systems are typically simplex communication systems (one way only) so that there is no easy way to retransmit data when errors are detected. Accordingly, some form of error compensation is required. Fortunately, television data is generally used in a very transient manner, unlike computer data that must be assured of accurate transmission. If a few frames of a TV image are disturbed most viewers accept this without even a conscious acknowledgment of their occurrence. Accordingly, a much higher bit error rate can be tolerated, for example 1 erroneous data bit per 100,000. At this rate the human eye/brain system normally cannot even detect the video effects caused by this erroneous bit. Most digital modems work with bit error rates of 1 in 100,000,000 to 1 in 1,000,000,000! Therefore, the video-on-demand system can tolerate error rates typically from 1,000 to 10,000 times higher than most computer data systems are presently designed for. A higher error rate will of course improve performance, although the improvement may be imperceptible to a viewer.

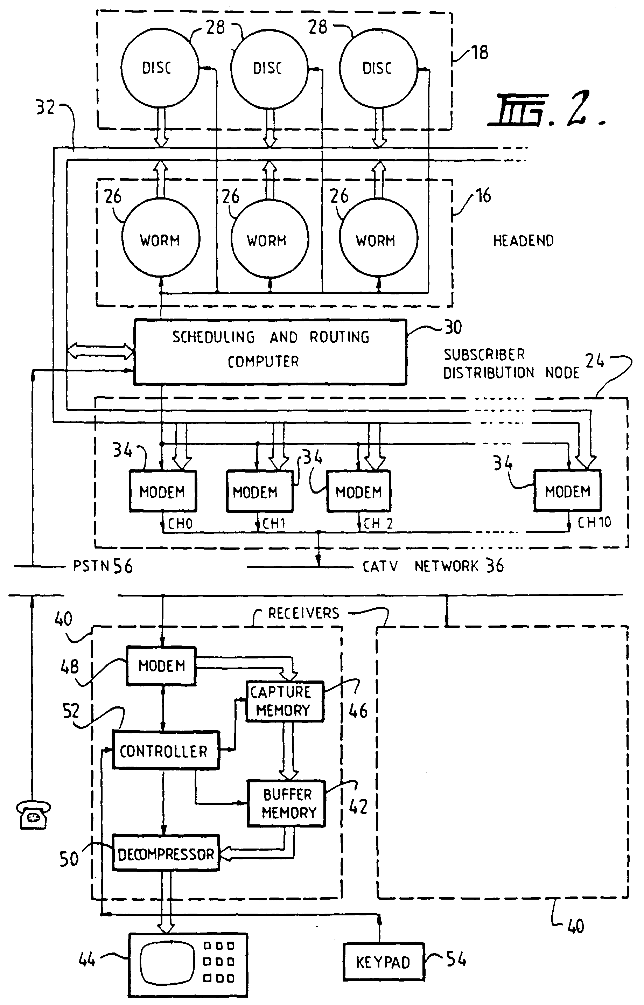

Figure 2 illustrates in block diagram form a preferred embodiment of the video-on-demand system applied to a CATV network. The video demand system comprises at the head end means for providing a video program in a compressed format in the form of Write Once Read Many (WORM) storage devices and magnetic disc storage devices 28 providing long term fast storage 16 and short term fast storage 18 respectively. In this particular embodiment the compressed video material is stored in digital format in the storage devices and the video programs may already be segmented in the storage media in video packets sized to be compatible with the system specifications. The magnetic disc devices 28 and WORM devices 26 are connected to a scheduling and routing computer 30 by data bus 32.

The scheduling and routing computer 30 responds to a subscriber request for a particular program by retrieving the video program from the appropriate storage media and dividing the video program into a plurality of video segments. As mentioned above, the video program may be stored in the storage media already in segments corresponding to the scheduling requirements of the system thereby reducing the load on the computer 30 during the process of retrieving and dividing the video program into video segments. The computer 30 then schedules the plurality of video segments of the video program in accordance with a scheduling algorithm, as will be described in more detail below, and routes the scheduled video segments for transmission to one or more receivers of viewers requesting the video program. For core video programs (those that are in continuous demand by at least one subscriber for periods of more than one Video Playing Time (VPT)), the scheduling algorithm can be run once and the packets stored in the scheduled sequence on a serial recording device such as a tape drive (not shown), to further reduce loading on the computer.

In this embodiment the subscriber distribution node 24 comprises a plurality of modems 34 under the control of the scheduling and routing computer 30. Each modem 34 modulates a different carrier frequency signal, corresponding to each of the channels on the CATV network 36, for transmitting the video segment data packets routed to the appropriate modem 34 by the scheduling and routing computer 30 over data bus 32.

Each subscriber on the CATV network 36 is provided with a receiver 40 for receiving the video segment data packets corresponding to the requested program and storing the video segments for future viewing by the subscriber. Each receiver 40 typically comprises a buffer memory 42 for storing the video segments of the video program transmitted from the head end, and video processing means for processing the video segments stored in the buffer memory and supplying the segments in the correct sequence to a subscriber television set 44 for viewing. Typically the video processing means may include a controller 52 and a capture memory 46 for capturing the video segment data packets received over the CATV network 36 and demodulated by one or more modems 48 of the receiver. Under the control of controller 52 the video processing means distinguishes received program segments by a segment identifier, for example the PKT ID, so that redundant segments can be ignored and overwritten in capture memory 46. Modem 48 is preferably a frequency agile broad band modem such as the Fairchild M505, although as noted above a more low level digital modem with lower bit error rate can also be employed. Compressed video data packets captured in capture memory 46 are stored in buffer memory 42 from which the segments can be retreived and decompressed in data decompressor 50 for immediate or subsequent viewing. The microprocessor based controller 52 controls the flow of data and the video processing within the receiver 40.

Some CATV systems can accommodate bidirectional decoders or receivers, and for this type of system the receiver 40 is provided with a key pad 54 to enable the subscriber to initiate a request via the CATV network 36. However, the majority of CATV systems are unidirectional (simplex) and a subscriber request must therefore be made over the public switched telephone network (PSTN) 56. The subscriber request via the PSTN 56 may be verbal or via touch tone keying similar to that provided by other on-line subscriber network service providers.

Security on the system to prevent unauthorised viewing of transmitted programs may be implemented in several ways. Standard encryption algorithms could be applied at the modems 34 prior to transmission. Each receiver 40 would then require a key to decrypt the received data. Encryption/ decryption keys are distributed to subscribers in a similar manner to that employed by financial institutions to distribute PINs for automatic teller machine usage. Alternatively, each data packet transmitted at the head end can be prefixed with a receiver ID unique to each subscriber so that a pirate receiver would need to select the appropriate receiver ID in order to receive a particular video program.

It will be appreciated that the video-on-demand system illustrated in Figure 2 is exemplary only, and that many other hardware implementations could be employed to effect the method and system for supplying video-on-demand according to the invention. For example, the receivers 40 may comprise several modems for simultaneously receiving data packets over several channels, and the capture memory may be dispensed with if the video segments are stored in the buffer memory in compressed format. The video segments are then decompressed when they are provided to the subscriber's television set in the correct sequence for viewing. Furthermore, certain sections of the head end apparatus or of the receiver may be located at different geographical locations. For example, in view of the typical architecture of CATV systems, it is possible that the modem and buffer sections of the receiver will become part of the cable network in what is referred to as a subscriber tap, and that the other sections would be located at the subscriber's premises.

It should be noted that the video segment data packets for a particular program need not be transmitted over the same channel for all viewing subscribers. By employing a combination of time division multiplexing and multiple channels at the head end of the system, data rates over each of the channels can be kept at a minimum therefore allowing the use of less expensive hardware at the receivers. Each receiver 40 may be configured to scan the channels in a cyclic fashion in order to determine on which channel or channels the appropriate video segments are being transmitted. In addition to this a dedicated control channel can be provided over which data from the scheduling and routing computer 30 is transmitted to instruct each receiver as to which packets to receive and on which channel(s). However, preferably the head end transmits the video segments in accordance with the scheduling algorithm in a continuous manner, with each video segment provided with a title ID as well as a segment ID, so that each receiver will receive all of the video segments with the appropriate title ID and can discard or overwrite the video segments already received.

A key feature of the present invention is the scheduling of the video segments for transmission in a redundant sequence in a manner that will ensure that each receiver will receive all of the video segments for the requested program according to a schedule that will enable continuous playback in real time of the video program at the receiver. A preferred form of an efficient scheduling algorithm and its implementation will now be described in detail.

In the following description the term "Maximum Response Time" (MRT) refers to the maximum time a subscriber will need to wait before the video program requested will be available for viewing at his receiver. MRT refers to the maximum time that the system has to respond to the demand. Video Play Time (VPT) refers to the time required to play the particular video program when viewed at normal play back speed. The data that comprises the video program must be divided into video segment data packets of such a length that one packet can be transmitted in the time of 1 MRT. The video segment play back time or slot length of one data packet need not be less than 1 MRT and may be longer than 1 MRT depending on how much band width is available over the transmission medium for transmitting the data packet(s) in the time of 1 MRT. The slot length may be variable in order to adjust the instantaneous loading and data rates on the transmission medium or to adjust the amount of buffer storage space required in the receivers. However, in any one installation, the slot length and MRT would normally be fixed for a specific system configuration. In the following description the slot length has been made equal to the MRT in order to simplify explanation. Thus, for example, if the video program is 60 minutes long and the MRT is 5 minutes, the video program is divided into 12 discreet data packets each corresponding to 5 minutes of video segment data. Each of the data packets is numbered from 1 to n where n equals VPT/MRT, in chronological viewing order.

Implementation of the scheduling algorithm is preferably under software controlled by the scheduling and routing computer 30. The basic flow of the scheduling program is as follows:

```
                set MRT equal to chosen maximum response time
                set a counter equal to 0 an initial value
                retrieve video segment data packets sized to relate
                to a play time of MRT (PKT1, PKT2 ....PKTn).
loop            wait for remainder of period equal to MRT
                set COUNT equal to COUNT plus 1
                if (COUNT Modulo 1) = 0 then transmit PKT1
                if (COUNT Modulo 2) = 0 then transmit PKT2
                if (COUNT Modulo 3) = 0 then transmit PKT3
                ...........................................
                ...........................................
                ...........................................
                if (COUNT Modulo n) = 0 then transmit PKTn
                start again at loop
Note: (x Modulo y) = the remainder of (x divided by y).
```

In accordance with the above scheduling algorithm video segment data packets are transmitted in a redundant sequence, with one or more data packets being transmitted during each MRT. Each transmission starts at an incremental time n*MRT, and in many instances a majority of the MRT period is expended in actually accomplishing the transmissions. With the above scheduling algorithm PKT1 will always be transmitted, however the other packets may or may not be transmitted at any given value for COUNT. Hence, any particular requesting receiver may receive the packets in a non-contiguous stream. Thus, for an MRT = 5 and a VPT = 60 it may receive the packets as follows:

| MRT | PKTs Received | PKTs Viewed |
|---|---|---|
| 1 | PKT1 AND PKT3 | PKT1 VIEWED |
| 2 | PKT2 | PKT2 VIEWED |
| 3 | PKT4 AND PKT8 AND PKT12 | PKT3 VIEWED |
| 4 | NO PACKETS | PKT4 VIEWED |
| 5 | PKT5 AND PKT6 AND PKT7 AND PKT11 | PKT5 VIEWED |
| 6 | NO PACKETS | PKT6 VIEWED |
| 7 | NO PACKETS | PKT7 VIEWED |
| 8 | PKT9 AND PKT10 | PKT8 VIEWED |
| 9 | | PKT9 VIEWED |
| 10 | | PKT10 VIEWED |
| 11 | | PKT11 VIEWED |
| 12 | | PKT12 VIEWED |

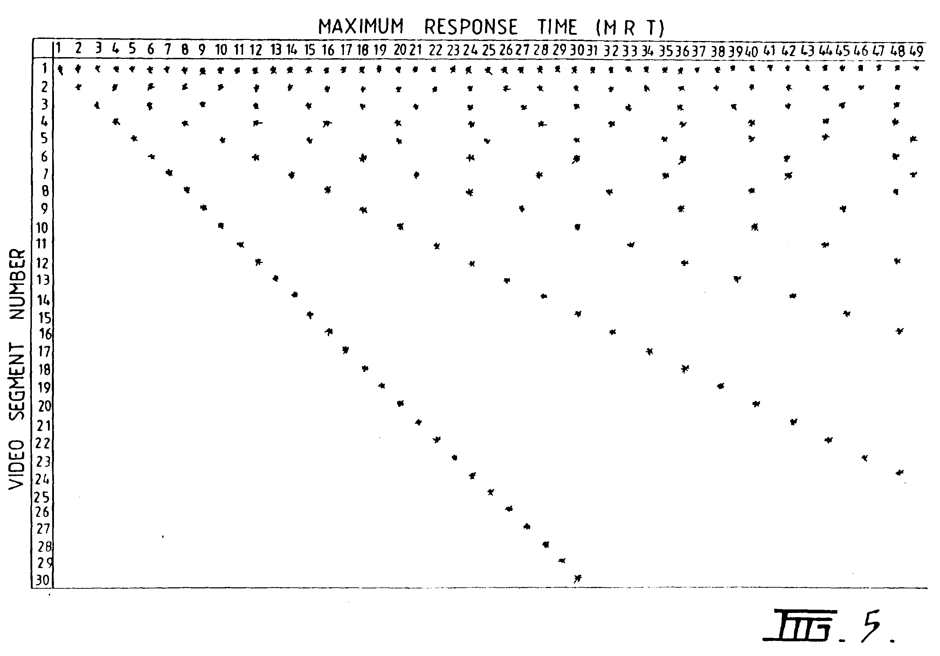

The above sequence is just one of many possible packet delivery sequences produced by the algorithm. Figure 5 is a graphical representation of the sequence of video segment data packets transmitted during each MRT time interval. The number of each video segment appears on the vertical axis and the number of the MRT interval appears along the horizontal axis. Figure 5 shows a maximum of 30 video segments and 49 MRT intervals, however obviously these are arbitrary numbers and both axes could be continued indefinitely. There would be a practical limit to the number of video segments that the video program could be divided into, however the number of MRT intervals will be a function of the duration for which a particular program is in continuous demand. From casual observance of the sequence output of the algorithm it would appear to be a random ordering of packets. However, although the sequence may be considered pseudo-random, it is in fact non-random in that it ensures that a receiver never has to wait on any packet to be transmitted and can provide immediate viewing of the video segments in the correct sequence. Accordingly, by the time the receiver is ready to display a particular packet, that packet will either be in the buffer memory, or being received at that time.

In the above table, redundant packets have not been included in the "PKTs received" column since in practice these would be discarded or overwritten by the receiver. In the above sequence example it will be noted that within a time equal to 8 MRTs all 12 packets have been received, and that certain packets, for example PKT12, is received by the receiver well before it is needed for viewing. PKT12 and any other packets received early are held in the buffer until the appropriate time for viewing. The scheduling algorithm ensures that a packet is always received when it is due to be viewed or before.

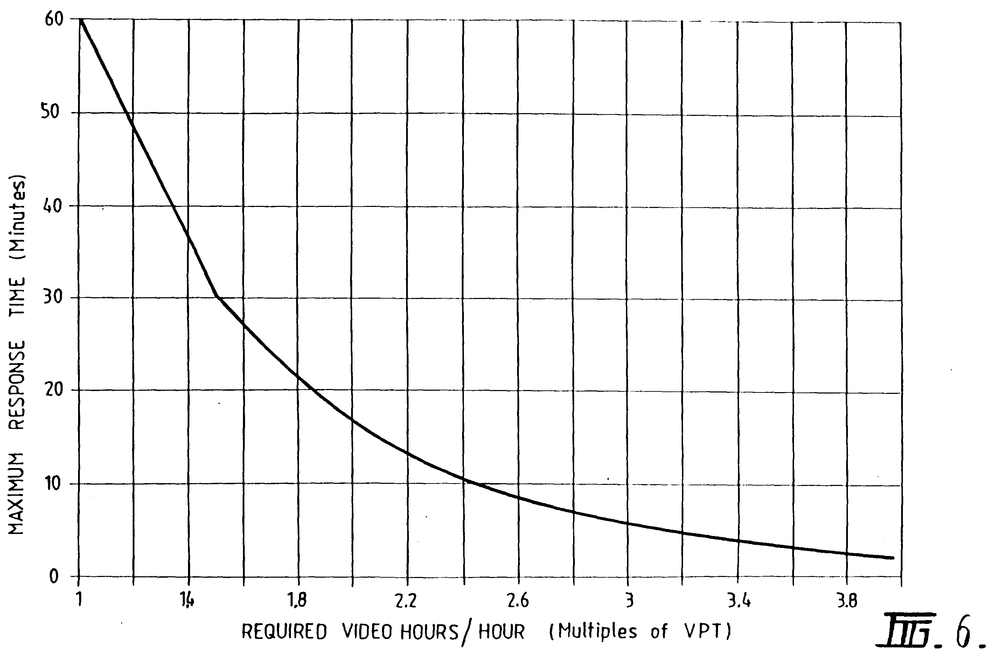

In Figure 6, it can be seen that at certain times, for example, MRT intervals 12, 24 and 36 a larger number of packets are received than at other times, which tends to increase the load on the transmission medium and the buffer memory in the receivers. It is preferable that the buffer memory be large enough to store all of the data packets for a particular program, and this also enables the receiver to store the program for later viewing if desired.

The underlying design considerations for the scheduling algorithm and the amount of buffer memory required in the receivers involve trade off's between the response time (MRT) guaranteed to viewers, the bandwidth required for servicing requests, and the amount of buffer storage space provided in the receivers. The principle advantage of a scheduling algorithm of the above kind is the efficient utilisation of the transmitting medium that can be realised. Thus, for example, if an MRT of 5 minutes is required, without the scheduling algorithm the complete video program would need to be transmitted continuously from the beginning every 5 minutes. Thus, for a program with 60 minutes play time the complete program would have to be transmitted 12 times. Using the above scheduling algorithm the number of data packets required to be transmitted to provide an MRT of 5 minutes is equal to having to transmit the entire program only 3.12 times.

The relationship between MRT and the total amount of data that must be transmitted can be represented by the following "best fit curve" equation:

$$\text{TOTAL DATA} = \frac{\text{LOG (MRT/154.94)}}{-0.47782}$$

Total data is in terms of VPT, so that a data amount of 3 is equal to 3 times the VPT or 180 minutes worth of data for a 60 minute program supplied with an MRT of 5 minutes. Figure 6 is a graphical representation of the relationship between MRT and the required video-hours/hour of transmission time or the total amount of data transmitted.

It will be appreciated that although the above described scheduling algorithm is the preferred form, modifications can be made to the algorithm that would allow trade off's between transmission efficiency and the amount of buffer storage required. Commercial considerations will determine how the balance of system costs are weighted. If more is spent on receiver buffers, then less will be required to be spent on provision of transmission lines.

In an example of a modified scheduling algorithm it is possible to diverge from the requirement of always sending PKT1. In this case, PKT1 and other selected packets may be transmitted less frequently and held in available buffer storage space at the receivers until a request is lodged. For example, the following implementation can be adopted:

Each receiver is provided with low power buffer memory devices which are kept active at all times for receiving selected packets of video programs. Assuming there are, say, 10 core video programs, the receivers can be configured to store PKT1 of each of the 10 core video programs, PKT1 being only transmitted at predetermined intervals in accordance with the modified scheduling algorithm, rather than at each MRT as in the above described scheduling algorithm. Hence, when a request for a core program is lodged, the first packet is already in the receiver buffer memory and can be immediately accessed for viewing while the modified scheduling algorithm is then implemented. This can reduce transmission bandwidth requirements considerably, with a modest increase in receiver cost, while providing instantaneous delivery of the core program to the viewer.

It is also possible to reduce peak transmission loads by diverging from the requirement that all requests start to be serviced within a maximum period equal to MRT. By accepting a small percentage of service delays, it is possible to further smooth the transmission load.

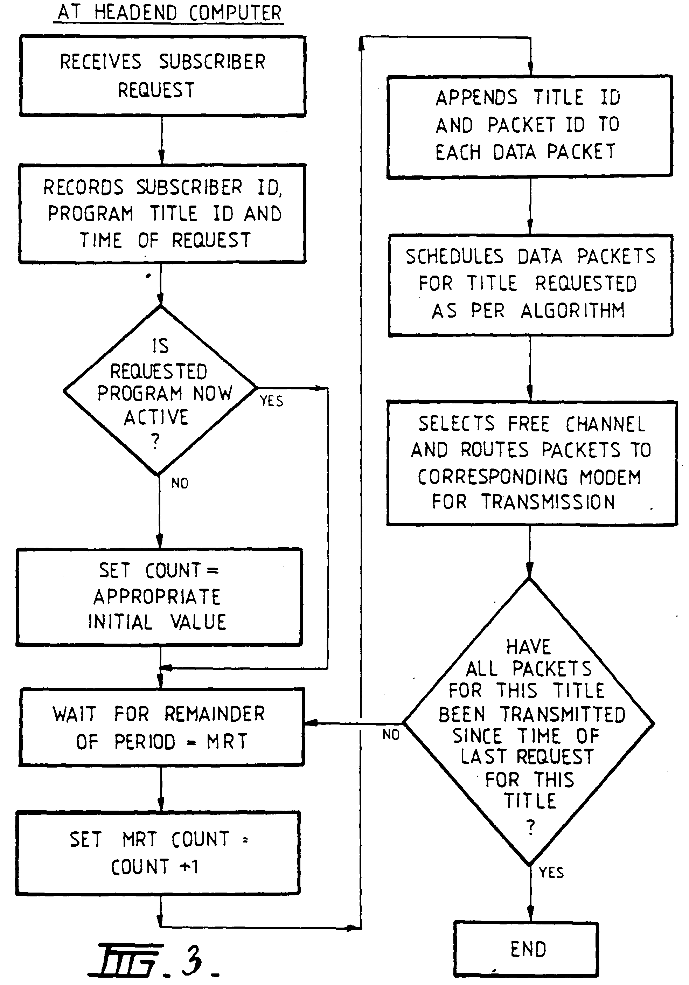

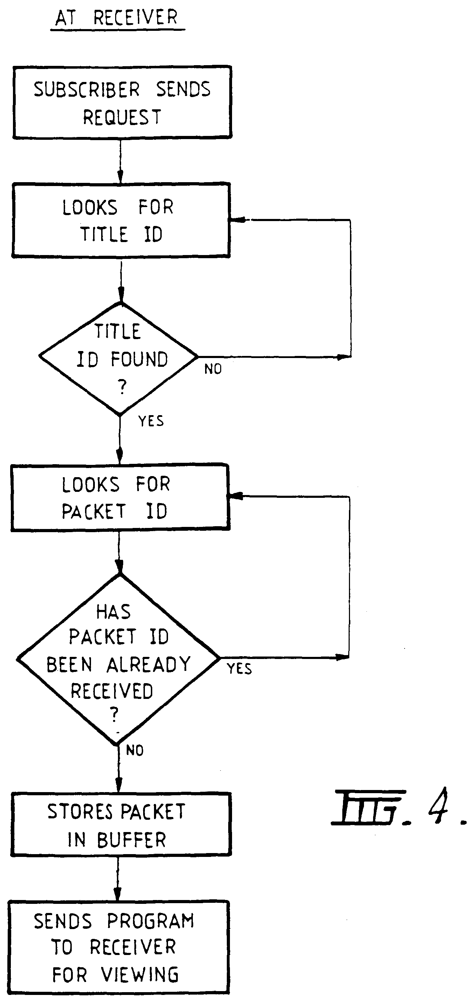

A typical software control sequence at both the head end computer and at the receiver will now be described with reference to Figures 3 and 4. When the head end scheduling and routing computer receives a subscriber request it records the subscriber ID, the requested program title ID and the time of request. The computer tracks each request and its progress towards completion in accordance with the scheduling algorithm. There will normally be several program streams being transmitted at any one time. The scheduling algorithm generates different data rates at different times as noted above. By staggering the entry value of COUNT for different program streams, the total data rate on the transmission medium can be maintained at a fairly constant level. Depending upon the value of COUNT at which a particular request enters the algorithm, the time taken to complete transmission of a requested program may range from 1 MRT to 1 VPT or any value in between.

Hence, when the head end computer has recorded the subscriber ID, title ID and time of request it determines whether the requested program is currently active, and if so enters the scheduling sequence at the conclusion of the current MRT time interval. If the requested program is not currently active then the COUNT value of the computer's internal counter, (may be a software counter) is set to the appropriate initial value to provide a staggering of the entry value of COUNT for each different program stream. Thus, for example, assuming requests are made simultaneously for programs A, B, C and D, service of the four requests can all commence simultaneously. However, program A would enter the algorithm scheduling sequence with COUNT equal to zero, B with COUNT equal to 1, C with COUNT equal to 2 and D with COUNT equal to 3. Thus, during each MRT time interval different numbers of video segments for each of the programs would be transmitted simultaneously, rather than the same number of video segments for each respective program.

At the commencement of the next MRT interval the computer enters the scheduling algorithm program sequence noted above and schedules the data packets for the title requested as per the scheduling algorithm. The computer also appends the title ID and packet ID to each data packet. The computer then selects a free channel and routes the data packets to the corresponding modem for transmission to the requesting receivers. The head end computer follows this sequence of steps until all of the packets for the requested title have been transmitted since the time of the last request for this title. As soon as the computer has determined that all pending requests have been satisfied, no further data packets for that program are transmitted.

At the receiver, after the subscriber has sent a request the receiver scans the transmission channels and looks for the title ID. When the receiver finds the title ID it looks for the packet ID and stores any packets not already received in the buffer storage. If a packet has already been received this packet is discarded and the receiver continues to look for the remaining data packets until all the data packets for the video program have been received. Data packets stored in the buffer storage may be sent to the receiver directly for immediate viewing or stored for later viewing. Although not illustrated in Figure 4, the receiver may also be configured to look for its unique address ID to provide a degree of security against unauthorised data reception.

From the above description of a preferred embodiment of the program transmission optimisation comprising a system and method of supplying video-on-demand it will be apparent that the scheduling algorithm employed provides an efficient means of transmitting a program to multiple requesting subscribers who can commence playback of the program within a specified maximum response time. It will be apparent to those skilled in the electronics, television and telecommunication arts that numerous modifications and alterations may be made to the program transmission optimisation system and method, other than those already described, without departing from the basic inventive concepts. For example, in alternative realisations of the system and method an optical fibre network may be employed for the distribution system, for example, to provide programming on demand for aircraft passengers. Furthermore, the system and method can operate using analog communications as well as digital, or a mixture of both. Although in the video-on-demand system described the video program segments are transmitted in compressed format, this is obviously not an essential feature of the invention, since significant improvements in transmission efficiency can be achieved by relying upon the scheduling algorithm alone. All such modifications and alterations are to be considered within the scope of the present invention the nature of which is to be determined from the foregoing description and the appended claims.

## Claims

1. A method for optimising transmission of a program to multiple users over a distribution system (36), the method comprising:
   at a head end of the distribution system (36),

   providing the program divided into a plurality of program segments; and,
   transmitting the program segments in a redundant sequence in accordance with a scheduling algorithm;

   and at a receiver (22A/B/C, 40) of the distribution system (36),
   storing the transmitted program segments in a buffer storage means (42) in the receiver (22A/B/C, 40) for subsequent playback whereby, in use, said scheduling algorithm can ensure that a user's receiver (22A/B/C, 40) will receive all of the program segments in a manner that will enable continuous playback in real time of the program.

2. A method as claimed in claim 1, further comprising the step of selecting a Maximum Response Time (MRT) corresponding to a maximum time a user need wait to commence playing a requested program from its beginning.

3. A method as claimed in claim 2, wherein said step of providing the program involves providing the program divided into segments of a length selected such that at least one segment can be transmitted in the time of one MRT.

4. A method as claimed in claim 3, wherein said step of transmitting involves transmitting one or more segments during each MRT, including a first segment corresponding to a first segment of playing time of the program, in accordance with the scheduling algorithm whereby, in use, the first segment is always available at a receiver (22A/B/C, 40) within one MRT for immediate viewing.

5. A method as claimed in claim 1, wherein said step of transmitting involves transmitting the program segments in accordance with a modified scheduling algorithm adapted to smooth the transmission load and reduce transmission bandwidth requirements.

6. A method as claimed in claim 5, wherein said step of transmitting involves transmitting one or more initial segments at predetermined time intervals for storing indefinitely in low power buffer storage means (42) in the receiver (22A/B/C, 40), and transmitting the remaining segments in accordance with the scheduling algorithm whereby, in use, the first segment is, always available at the receiver (22A/B/C, 40) for immediate viewing.

7. A method as claimed in claim 2, further comprising at the head end of the distribution system (36) the step of numbering the program segments 1 to n, where n equals the number of segments into which the program is divided, and wherein the segments are numbered in the order in which they should appear in the program for normal playback.

8. A method as claimed in claim 7, wherein the scheduling algorithm involves iteratively calculating during each MRT the result of:

$$\text{COUNT Modulo } X = Y,$$

wherein

COUNT = a predetermined initial whole number incremented by 1 after each MRT;
X = 1 to n, where n = the number of segments into which the program has been divided;

whereby, in use, whenever Y=0, the program segment number X will be transmitted.

9. A method as claimed in claim 1, further comprising prior to said step of transmitting, a step of compressing the program whereby said plurality of program segments can be provided in a compressed format.

10. A method as claimed in claim 1, further comprising the steps of recording a user identification number, a program title identification number and a time of each request in a subscriber request map; and, tracking each request and its progress towards completion.

11. A system for optimising transmission of a program to multiple users, the system comprising:
at a head end of the system:

means (16, 18) for providing the program divided into a plurality of program segments; and,
means (20, 30) for transmitting the program segments in a redundant sequence in accordance with a scheduling algorithm;

and at a receiver (22A/B/C, 40) of the system,
buffer storage means (42) for storing the transmitted program segments for subsequent playback on the receiver (22A/B/C, 40) whereby, in use, said scheduling algorithm can ensure that the receiver (22A/B/C, 40) will receive all of the program segments in a manner that will enable continuous playback in real time of the program at the receiver.

12. A system as claimed in claim 11, further comprising at the head end of the system:

means for numbering the program segments 1 to n, where n equals the number of segments into which the program is divided, and wherein the segments are numbered in the order in which they should appear in the program for normal playback.

13. A system as claimed in claim 12, further comprising at the head end of the system:

means for appending a segment identifier to each program segment prior to transmitting, wherein said segment identifier at least identifies a program segment by its number.

14. A system as claimed in claim 11 or 12, wherein said means (20, 30) for transmitting transmits one or more of said program segments during each Maximum Response Time (MRT) time interval, wherein MRT corresponds to a maximum time a user need wait to commence playing a requested program.

15. A system as claimed in claim 14, further comprising at the head end of the system:

means (20, 30) for iteratively calculating during each MRT the result of the scheduling algorithm:

$$COUNT \ Modulo \ X = Y$$

wherein

COUNT = a predetermined initial whole number incremented by 1 after each MRT;
X = 1 to n, where n = the number of segments into which the program has been divided;

whereby, in use, whenever Y=0, the program segment number X will be transmitted.

16. A receiver (22A/B/C, 40) for receiving a program supplied by a program transmission optimisation system, the receiver comprising:

buffer storage means (22A/B/C, 40) for storing a plurality of program segments of the program transmitted from a head end of the system according to a scheduling algorithm; and,
processing means (52) for processing said program segments stored in the buffer storage means (42) and supplying the segments in the correct sequence for playback whereby, in use, said scheduling algorithm can ensure that the receiver (22A/B/C, 40) will receive all of the program segments in a manner that will enable continuous playback in real time of the program at the receiver.

17. A receiver (22A/B/C, 40) as claimed in claim 16, where said processing means (52) comprises means for distinguishing received program segments by a segment identifier, wherein said segment identifier at least identifies a segment by its number whereby, in use, the receiver can distinguish redundant segments from segments required for subsequent playback.

18. A receiver as claimed in claim 16 or 17, wherein said processing means (52) further comprises decompressing means (50) for decompressing compressed program segments transmitted from the head end of the program transmission optimisation system.

19. A scheduling apparatus for a program transmission optimisation system, the apparatus comprising:

means (16, 18) for providing the program divided into a plurality of program segments; and,
means (20, 30) for scheduling said plurality of program segments in a redundant sequence in accordance with a scheduling algorithm;

whereby, in use, said scheduled program segments can be transmitted to one or more receivers (22A/B/C, 40) of users requesting the program and wherein said scheduling algorithm can ensure that a user's receiver (22/A/B/C, 40) will receive all of the program segments in a manner that will enable continuous playback in real time of the program.

20. A scheduling apparatus as claimed in claim 19, further comprising means for routing (20, 30) said scheduled program segments to said one or more receivers (22A/B/C, 40) of users requesting the program.

21. A scheduling apparatus as claimed in claim 19, wherein said means (16, 18) for providing the program, provides the program divided into segments of a length selected such that at least one segment can be transmitted in a Maximum Response Time (MRT) time interval, wherein MRT corresponds to a maximum time a user need wait to commence playing a requested program from its beginning.

22. A scheduling apparatus claimed in claim 21, further comprising means for numbering the program segments 1 to n, where n equals the number of segments into which the program is divided, and wherein the segments are numbered in the order in which they should appear in the program for normal playback.

23. A scheduling apparatus as claimed in claim 22, further comprising means (20, 30) for iteratively calculating during each MRT the result of the scheduling algorithm:

$$COUNT\ Modulo\ X = Y,$$

wherein

COUNT = a predetermined initial whole number incremented by 1 after each MRT;
X = 1 to n, where n = the number of segments into which the program has been divided;

whereby, in use, whenever Y=0, the program segment number X will be transmitted.

24. An apparatus as claimed in claim 23, wherein said means (16, 18) for providing the program retrieves the program segments from a compressed program storage means wherein the program is stored in a compressed segmented format corresponding to said plurality of segments.

## Patentansprüche

1. Verfahren zur optimierung der Übertragung eines Programmes an mehrere Benutzer über ein Verteilungssystem (36), umfassend:
an einer Kopfstelle des Verteilungssystems (36),

Bereitstellen des in eine Vielzahl von Programmsegmenten zerteilten Programmes, und
Übertragen der Programmsegmente in einer redundanten Sequenz gemäß einem Zuteilungsalgorithmus,

und, bei einem Empfänger (22A/B/C, 40) des Verteilungssystems (36),
Speichern der übertragenen Programmsegmente in einem Zwischenspeichermittel (42) des Empfängers (22A/B/C, 40) zur anschließenden Wiedergabe, wodurch im Betrieb der Zuteilungsalgorithmus sicherstellen kann, daß der Empfänger (22A/B/C, 40) eines Benutzers alle Programmsegmente in einer Art und Weise empfängt, die eine kontinuierliche Wiedergabe des Programms in Echtzeit gestattet.

2. Verfahren nach Anspruch 1, des weiteren umfassend den Schritt des Auswählens einer maximalen Ansprechzeit (MRT), die der maximalen Zeit entspricht, die ein Benutzer bis zum Beginn des Abspielens eines angeforderten Programms von dessen Anfang an warten muß.

3. Verfahren nach Anspruch 2, in dem der Schritt des Bereitstellens des Programms einschließt, das Programm in Segmente zerteilt bereitzustellen, deren Länge so gewählt ist, daß mindestens ein Segment in der Dauer einer MRT übertragen werden kann.

4. Verfahren nach Anspruch 3, in dem der Schritt des Übertragens das Übertragen eines oder mehrerer Segmente gemäß dem Zuteilungsalgorithmus während jeder MRT einschließt, einschließlich eines ersten Segments, das einem ersten Spielzeitsegment des Programms entspricht, wodurch im Betrieb das erste Segment immer innerhalb einer MRT bei einem Empfänger (22A/B/C, 40) zum unmittelbaren Betrachten verfügbar ist.

**5.** Verfahren nach Anspruch 1, in dem der Schritt des Übertragens das Übertragen der Programmsegmente gemäß einem modifizierten Zuteilungsalgorithmus einschließt, der zum Glätten der Übertragungslast und zum Reduzieren der Anforderungen an die Übertragungsbandbreite ausgelegt ist.

**6.** Verfahren nach Anspruch 5, in dem der Schritt des Übertragens einschließt, eines oder mehrere Ausgangssegmente zu vorgegebenen Zeitintervallen zum Speichern auf unbegrenzte Zeit in einem Niederleistungs-Zwischenspeichermittel (42) in dem Empfänger (22A/B/C, 40) zu übertragen und die verbleibenden Segmente gemäß dem Zuteilungsalgorithmus zu übertragen, wodurch das erste Segment im Betrieb immer bei dem Empfänger (22A/B/C, 40) zum unmittelbaren Betrachten verfügbar ist.

**7.** Verfahren nach Anspruch 2, das an der Kopfstelle des Verteilungssystems (36) weiter den Schritt der Numerierung der Programmsegmente von 1 bis n umfaßt, wobei n der Anzahl der Segmente entspricht, in die das Programm zerteilt ist, und worin die Segmente in der Reihenfolge numeriert sind, in welcher sie in dem Programm zur normalen Wiedergabe erscheinen sollen.

**8.** Verfahren nach Anspruch 7, in dem der Zuteilungsalgorithmus während jeder MRT das iterative Berechnen des Resultats von

$$COUNT \ Modulo \ X = Y$$

einschließt, worin

COUNT = eine vorgegebene ganze Ausgangszahl, die nach jeder MRT um 1 erhöht wird;
X = 1 bis n, mit n = die Anzahl der Segmente, in die das Programm zerteilt wurde;

wodurch im Betrieb, wann immer Y = 0 ist, das Programmsegment mit der Nummer X übertragen wird.

**9.** Verfahren nach Anspruch 1, vor dem Schritt des Übertragens weiter umfassend einen Schritt des Komprimierens des Programms, wodurch die Vielzahl der programmsegmente in einem komprimierten Format bereitgestellt werden kann.

**10.** Verfahren nach Anspruch 1, weiter umfassend die Schritte des Aufzeichnens einer Benutzeridentifikationsnummer, einer Programmtitelidentifikationsnummer und einer Zeit jeder Anforderung in einer Teilnehmeranforderungskarte sowie des Verfolgens jeder Anforderung und ihrer Entwicklung bis zum Abschluß.

**11.** System zur optimierten Übertragung eines Programmes an mehrere Benutzer, umfassend:
an einer Kopfstelle des Systems,

ein Mittel (16, 18) zum Bereitstellen des in eine Vielzahl von Programmsegmenten zerteilten Programmes und ein Mittel (20, 30) zum Übertragen der Programmsegmente in einer redundanten Sequenz gemäß einem Zuteilungsalgorithmus,

und, bei einem Empfänger (22 A/B/C, 40) des Systems,

ein Zwischenspeichermittel (42) zum Speichern der übertragenen Programmsegmente zur anschließenden Wiedergabe in dem Empfänger (22A/B/C, 40), wodurch im Betrieb der Zuteilungsalgorithmus sicherstellen kann, daß der Empfänger (22A/B/C, 40) alle Programmsegmente in einer Art und Weise empfängt, die eine kontinuierliche Wiedergabe des Programms beim Empfänger in Echtzeit gestattet.

**12.** System nach Anspruch 11, an der Kopfstelle des Systems weiter umfassend:
ein Mittel zum Numerieren der Programmsegmente von 1 bis n, wobei n der Anzahl der Segmente entspricht, in die das Programm zerteilt ist, und worin die Segmente in der Reihenfolge numeriert sind, in welcher sie in dem Programm zur normalen Wiedergabe erscheinen sollen.

**13.** System nach Anspruch 12, an der Kopfstelle des Systems weiter umfassend:
ein Mittel zum Anbringen einer Segmentidentifizierung an jedem Programmsegment vor der Übermittlung, wobei die Segmentidentifizierung ein Programmsegment wenigstens anhand seiner Nummer identifiziert.

**14.** System nach Anspruch 11 oder 12, in dem das Übertragungsmittel (20, 30) eines oder mehrere der Programmsegmente während jedem einer maximalen Ansprechzeit (MRT) entsprechenden Zeitintervall überträgt, wobei MRT einer maximalen Zeitdauer entspricht, die ein Benutzer bis zum Beginn des Abspielens eines angeforderten Programms warten muß.

**15.** System nach Anspruch 14, an der Kopfstelle des Systems weiter umfassend:
ein Mittel (20, 30) zum iterativen Berechnen des Resultats des Zuteilungsalgorithmus:

$$COUNT \; Modulo \; X = Y$$

während jeder MRT, worin COUNT = eine vorgegebene ganze Ausgangszahl, die nach jeder MRT um 1 erhöht wird;
X = 1 bis n, mit n = die Anzahl der Segmente, in die das Programm zerteilt wurde;

wodurch im Betrieb, wann immer Y = 0 ist, das Programmsegment mit der Nummer X übertragen wird.

**16.** Empfänger (22A/B/C, 40) zum Empfang eines durch ein Programmübertragungsoptimierungssystem bereitgestellten Programms, umfassend:

ein Zwischenspeichermittel (42) zum Speichern einer Vielzahl von Programmsegmenten des von einem Kopfstelle des Systems gemäß einem Zuteilungsalgorithmus übertragenen Programms, und
ein Verarbeitungsmittel (52) zum Verarbeiten der in dem Zwischenspeichermittel (42) gespeicherten Programmsegmente und zum Bereitstellen der Segmente in der für die Wiedergabe richtigen Reihenfolge, wodurch im Betrieb der Zuteilungsalgorithmus sicherstellen kann, daß der Empfänger (22A/B/C, 40) alle Programmsegmente in einer Art und Weise empfängt, die eine kontinuierliche Wiedergabe des Programms bei dem Empfänger in Echtzeit gestattet.

**17.** Empfänger (22A/B/C, 40) nach Anspruch 16, in dem das Verarbeitungsmittel (52) ein Mittel zum Unterscheiden empfangener Programmsegmente mittels einer Segmentidentifizierung umfaßt, wobei die Segmentidentifizierung ein Segment wenigstens durch dessen Nummer identifiziert, wodurch im Betrieb der Empfänger redundante Segmente von Segmenten unterscheiden kann, die zur nachfolgenden Wiedergabe erforderlich sind.

**18.** Empfänger nach Anspruch 16 oder 17, in dem das Verarbeitungsmittel (52) des weiteren ein Dekomprimierungsmittel (50) zum Dekomprimieren komprimierter Programmsegmente umfaßt, die von dem Kopfstelle des Programmübertragungsoptimierungssystems übertragen wurden.

**19.** Zuteilungsgerät für ein Programmübertragungsoptimierungssystem, umfassend:

ein Mittel (16, 18) zum Bereitstellen des in eine Vielzahl von Programmsegmenten zerteilten Programmes und
ein Mittel (20, 30) zum Zuteilen der Vielzahl von Programmsegmenten in einer redundanten Sequenz gemäß einem Zuteilungsalgorithmus,

wodurch im Betrieb die zugeteilten Programmsegmente an einen oder mehrere Empfänger (22A/B/C, 40) von das Programm anfordernden Benutzern übermittelt werden können und worin der Zuteilungralgorithmus sicherstellen kann, daß der Empfänger (22A/B/C, 40) eines Benutzers alle Programmsegmente in einer Art und Weise empfängt, die eine kontinuierliche Wiedergabe des Programms in Echtzeit gestattet.

**20.** Zuteilungsgerät nach Anspruch 19, das weiter ein Mittel (20, 30) zum Weiterleiten der zugeteilten ProgrammSegmente an einen oder mehrere Empfänger (22A/B/C, 40) von das Programm anfordernden Benutzern umfaßt.

**21.** Zuteilungsgerät nach Anspruch 19, in dem das Mittel (16, 18) zum Bereitstellen des Programms das Programm in Segmente zerteilt bereitstellt, deren Länge so gewählt ist, daß mindestens ein Segment in einem einer maximalen Ansprechzeit (MRT) entsprechenden Zeitintervall übertragen werden kann, wobei MRT einer maximalen Zeit entspricht, die ein Benutzer bis zum Beginn des Abspielens eines angeforderten Programms von dessen Anfang an warten muß.

**22.** Zuteilungsgerät nach Anspruch 21, des weiteren umfassend ein Mittel zum Numerieren der Programmsegmente von 1 bis n, wobei n der Anzahl der Segmente entspricht, in die das Programm zerteilt ist, und worin die Segmente in der Reihenfolge numeriert sind, in welcher sie in dem Programm zur normalen Wiedergabe erscheinen sollen.

23. Zuteilungsgerät nach Anspruch 22, des weiteren umfassend ein Mittel (20, 30) zum iterativen Berechnen des Resultats des Zuteilungsalgorithmus:

$$\text{COUNT Modulo } X = Y$$

während jeder MRT, worin COUNT = eine vorgegebene ganze Ausgangszahl, die nach jeder MRT um 1 erhöht wird;
X = 1 bis n, mit n = die Anzahl der Segmente, in die das Programm zerteilt wurde;

wodurch im Betrieb, wann immer Y = 0 ist, das Programmsegment mit der Nummer X übertragen wird.

24. Gerät nach Anspruch 23, in welchem das Mittel (16, 18) zum Bereitstellen des Programms die Programmsegmente aus einem Mittel zum Speichern des komprimierten Programms wiedergewinnt, in welchem das Programm in einem komprimierten zerteilten Format entsprechend der Vielzahl von Segmenten abgespeichert ist.

**Revendications**

1. Procédé pour optimiser la transmission d'un programme vers une multiplicité d'utilisateurs par l'intermédiaire d'un système de distribution (36), le procédé consistant:
à une extrémité de tête du système de distribution (36),

à obtenir le programme divisé en une pluralité de segments de programme; et
à transmettre les segments de programme suivant une séquence redondante en conformité avec un algorithme de planification;

et à un récepteur (22A/B/C, 40) du système de distribution (36)
à stocker dans un moyen de stockage tampon (42) du récepteur (22A/B/C, 40) les segments de programme transmis, en vue d'une restitution ultérieure, grâce à quoi, pendant l'utilisation, ledit algorithme de planification peut garantir que le récepteur (22A/B/C, 40) de l'utilisateur recevra tous les segments de programme d'une manière qui permettra une restitution continue en temps réel du programme.

2. Procédé selon la revendication 1, comprenant, en outre, l'étape de sélection d'un Temps de Réponse Maximum (MRT) correspondant à un temps maximum pendant lequel l'utilisateur doit attendre pour commencer la reproduction d'un programme demandé, depuis son début.

3. Procédé selon la revendication 2, dans lequel ladite étape d'obtention du programme implique l'obtention du programme divisé en segments d'une longueur choisie de telle manière qu'au moins un segment puisse être transmis pendant la durée d'un MRT.

4. Procédé selon la revendication 3, dans lequel ladite étape de transmission implique la transmission d'un ou plusieurs segments pendant chaque MRT, y compris un premier segment correspondant à un premier segment de temps de reproduction du programme, en conformité avec l'algorithme de planification, grâce à quoi, pendant l'utilisation, le premier segment est toujours disponible à un récepteur (22A/B/C, 40) dans les limites d'un MRT pour une visualisation immédiate.

5. Procédé selon la revendication 1, dans lequel ladite étape de transmission implique la transmission des segments de programme en conformité avec un algorithme de planification modifié, adapté pour uniformiser la charge de transmission et réduire les exigences de largeur de bande de transmission.

6. Procédé selon la revendication 5, dans lequel ladite étape de transmission implique la transmission d'un ou plusieurs segments initiaux à des intervalles de temps prédéterminés pour un stockage de façon indéfinie dans un moyen de stockage tampon (42) de faible puissance situé dans le récepteur (22A/B/C, 40); et la transmission des segments restants en conformité avec l'algorithme de planification grâce à quoi, pendant l'utilisation, le premier segment est toujours disponible au récepteur (22/A/B:C, 40) pour une visualisation immédiate.

7. Procédé selon la revendication 2, comprenant, en outre, à l'extrémité de tête du système de distribution (36) l'étape de numérotation des segments de programme de 1 à n, où n est égal au nombre de segments dont est divisé le programme, et dans lequel les segments sont numérotés dans l'ordre dans lequel ils doivent apparaître dans le programme pour un restitution normale.

8. Procédé selon la revendication 7, dans lequel l'algorithme de planification implique de façon itérative le calcul durant chaque MRT du résultat de:

$$\text{COMPTE modulo } X = Y$$

où

COMPTE = un nombre entier initial prédéterminé incrémenté de 1 après chaque MRT;
$X = 1$ à n, où n = le nombre de segments dont le programme a été divisé;

grâce à quoi , pendant l'utilisation, chaque fois que $Y = 0$, le nombre $X$ de segments de programme est transmis.

9. Procédé selon la revendication 1, comprenant, en outre, avant ladite étape de transmission, une étape de compression du programme, grâce à quoi ladite pluralité de segments de programme peut être obtenu dans un format comprimé.

10. Procédé selon la revendication 1, comprenant, en outre, les étapes consistant à enregistrer un numéro d'identification d'utilisateur, un numéro d'identification de titre de programme et l'heure de chaque demande dans une carte de demande de souscripteur; et à suivre chaque demande et sa progression vers son achèvement.

11. Système pour optimiser la transmission d'un programme vers une multiplicité d'utilisateurs, le système comprenant:
à une extrémité de tête du système:

un moyen (16, 18) pour obtenir le programme divisé en une pluralité de segments de programme; et
un moyen (20, 30) pour transmettre les segments de programme en une séquence redondante en conformité avec un algorithme de planification;

et à un récepteur (22A/B/C, 40) du système
un moyen de stockage tampon (42) pour stocker, en vue d'une restitution ultérieure sur le récepteur (22A/B/C, 40), les segments de programme transmis, grâce à quoi, pendant l'utilisation, ledit algorithme de planification peut garantir que le récepteur (22A/B/C, 40) recevra tous les segments de programme d'une manière qui permettra une restitution continue en temps réel du programme au récepteur.

12. Système selon la revendication 11, comprenant en outre à l'extrémité de tête du système:
un moyen pour numéroter les segments de programme de 1 à n, où n est égal au nombre de segments dont le programme est divisé, et dans lequel les segments sont numérotés dans l'ordre dans lequel ils doivent apparaître dans le programme pour une restitution normale.

13. Système selon la revendication 12, comprenant, en outre, à l'extrémité de tête du système:
un moyen pour adjoindre un identificateur de segment à chaque segment de programme avant la transmission, ledit identificateur de segment identifiant, au moins, un segment de programme par son numéro.

14. Système selon la revendication 11 ou 12, dans lequel ledit moyen (20, 30) de transmission transmet un ou plusieurs desdits segments de programme pendant chaque intervalle de Temps de Réponse Maximum (MRT), dans lequel MRT correspond à un temps maximum pendant lequel un utilisateur doit attendre pour commencer une reproduction d'un programme demandé.

15. Système selon la revendication 14, comprenant, en outre, à l'extrémité de tête du système:
un moyen (20, 30) pour calculer, de façon itérative, pendant chaque MRT le résultat de l'algorithme de planification

$$COMPTE \: modulo \: X = Y$$

où

COMPTE = un nombre entier initial prédéterminé incrémenté de 1 après chaque MRT;
X = 1 à n, où n = le nombre de segments dont le programme a été divisé;

grâce à quoi , pendant l'utilisation, chaque fois que Y = 0, le nombre X de segments de programme est transmis.

16. Récepteur (22A/B/C, 40) pour recevoir un programme fourni par un système d'optimisation de transmission de programme, ce récepteur comprenant:

un moyen de stockage tampon (22A/B/C, 40) pour stocker une pluralité de segments de programme du programme transmis depuis une extrémité de tête du système en conformité avec un algorithme de planification; et un moyen de traitement (52) pour traiter lesdits segments de programme stockés dans le moyen de stockage tampon (42) et fournir les segments dans la séquence correcte pour une restitution, grâce à quoi, pendant l'utilisation, ledit algorithme de planification peut garantir que le récepteur (22A/B/C, 40) recevra tous le segments de programme d'une manière qui permet une restitution continue en temps réel du programme au récepteur.

17. Récepteur (22A/B/C, 40) selon la revendication 16, où ledit moyen de traitement (52) comprend un moyen pour distinguer par un identificateur de segment les segments de programme reçus, ledit identificateur de segment identifiant, au moins, un segment par son numéro, grâce à quoi, pendant l'utilisation, le récepteur peut distinguer des segments redondants parmi les segments demandés en vue d'une restitution ultérieure.

18. Récepteur selon la revendication 16 ou 17, dans lequel ledit moyen de traitement (52) comprend, en outre, un moyen de décompression (50) pour décomprimer les segments de programme comprimés transmis depuis l'extrémité de tête du système d'optimisation de transmission de programme.

19. Appareil de planification pour un système d'optimisation de transmission de programme, cet appareil comprenant:

un moyen (16, 18) pour diviser le programme en une pluralité de segments de programme; et un moyen (20, 30) pour planifier ladite pluralité de segments de programme en une séquence redondante en conformité avec un algorithme de planification;

grâce à quoi, pendant l'utilisation, lesdits segments de programme planifiés peuvent être transmis à un ou plusieurs récepteurs (22A/B/C, 40) d'utilisateurs demandant le programme et dans lequel ledit algorithme de planification peut garantir qu'un récepteur (22/B/C, 40) recevra tous les segments de programme d'une manière qui permettra une restitution continue en temps réel du programme.

20. Appareil de planification selon la revendication 19, comprenant, en outre, un moyen (20, 30) pour acheminer lesdits segments de programme planifiés jusqu'à un ou plusieurs récepteurs (22A/B/C, 40) d'utilisateurs demandant le programme.

21. Appareil de planification selon la revendication 19, dans lequel ledit moyen (16, 18) pour obtenir le programme obtient le programme divisé en segments d'une longueur choisie de manière telle qu'au moins un segment peut être transmis dans un intervalle de Temps de Réponse Maximum (MRT), dans lequel MRT correspondant au temps maximum pendant lequel un utilisateur doit attendre pour commencer la reproduction d'un programme demandé, depuis son début.

22. Appareil de planification selon la revendication 21, comprenant, en outre, un moyen pour numéroter les segments de programme de 1 à n, n étant égal au nombre de segments dont le programme est divisé, et les segments étant numérotés dans l'ordre dans lequel ils devraient apparaître dans le programme pour une restitution normale.

23. Appareil selon la revendication 22, comprenant, en outre, un moyen (20, 30) pour calculer de façon itérative, pendant chaque MRT, le résultat de l'algorithme de planification:

COMPTE Modulo X = Y,

où

COMPTE = un nombre entier initial prédéterminé incrémenté de 1 après chaque MRT;
X = 1 à n, où n = le nombre de segments dont le programme a été divisé;

grâce à quoi, pendant l'utilisation, chaque fois que Y = 0, le numéro de segment de programme est transmis.

24. Appareil selon la revendication 23, dans lequel ledit moyen (16, 18) pour obtenir le programme extrait les segments de programme d'un moyen de stockage de programme comprimé, dans lequel le programme est stocké en un format segmenté comprimé correspondant à ladite pluralité de segments.

EXTERNAL NON-COMPRESSED
MATERIAL

MEDIA COMPRESSION
SYSTEM ~10

$\overline{HG}.1.$

EXTERNAL COMPRESSED
MATERIAL

INTERNAL COMPRESSED
MATERIAL

STORAGE
DISTRIBUTION NODE ~12 14~

LONG TERM
SLOW STORAGE

LONG TERM
FAST STORAGE ~16

18~ SHORT TERM
FAST STORAGE

20~

SCHEDULING AND
ROUTING COMPUTER — CONTROL →

SUBSCRIBER
DISTRIBUTION NODE

~24

BIDIRECTIONAL REQUEST
AND DISTRIBUTION NETWORK

| 123 |
| 456 |
| 789 |
| RECEIVER | *0# |

22A

| 123 |
| 456 |
| 789 |
| RECEIVER | *0# |

22B

| 123 |
| 456 |
| 789 |
| RECEIVER | *0# |

22C

FIG. 2.

## AT HEADEND COMPUTER

```
┌─────────────────────────┐
│   RECEIVES  SUBSCRIBER   │
│         REQUEST          │
└─────────────────────────┘
            │
            ▼
┌─────────────────────────┐
│  RECORDS SUBSCRIBER ID,  │
│  PROGRAM TITLE ID AND    │
│    TIME OF REQUEST       │
└─────────────────────────┘
            │
            ▼
        ◇ IS
     REQUESTED
   PROGRAM NOW ──YES──┐
      ACTIVE          │
        ? ◇           │
            │NO       │
            ▼         │
┌─────────────────────┐│
│   SET COUNT =       ││
│   APPROPRIATE       ││
│   INITIAL VALUE     ││
└─────────────────────┘│
            │          │
            ▼          │
┌─────────────────────┐│
│  WAIT FOR REMAINDER  │◄───── NO
│  OF PERIOD = MRT     │
└─────────────────────┘
            │
            ▼
┌─────────────────────┐
│  SET MRT COUNT =     │
│  COUNT +1            │
└─────────────────────┘
            │
            └──────────►
```

FIG.3.

```
            ┌──────────────────────────┐
            │    APPENDS TITLE ID      │
            │    AND PACKET ID TO      │
            │    EACH DATA PACKET      │
            └──────────────────────────┘
                        │
                        ▼
            ┌──────────────────────────┐
            │  SCHEDULES DATA PACKETS   │
            │   FOR TITLE REQUESTED     │
            │     AS PER ALGORITHM      │
            └──────────────────────────┘
                        │
                        ▼
            ┌──────────────────────────┐
            │  SELECTS FREE CHANNEL     │
            │  AND ROUTES PACKETS TO    │
            │  CORRESPONDING MODEM      │
            │     FOR TRANSMISSION      │
            └──────────────────────────┘
                        │
                        ▼
                    ◇ HAVE
                  ALL PACKETS
                 FOR THIS TITLE
                BEEN TRANSMITTED ──NO──►
                 SINCE TIME OF
                 LAST REQUEST
                   FOR THIS
                    TITLE
                      ? ◇
                        │YES
                        ▼
            ┌──────────────────────────┐
            │          END             │
            └──────────────────────────┘
```

AT RECEIVER

```
┌─────────────────────┐
│ SUBSCRIBER  SENDS   │
│      REQUEST        │
└─────────────────────┘
           │
           ▼
┌─────────────────────┐◄──────────┐
│    LOOKS   FOR      │           │
│     TITLE  ID       │           │
└─────────────────────┘           │
           │                      │
           ▼                      │
         ╱╲                       │
        ╱   ╲                     │
       ╱ TITLE╲                   │
      ╱ ID FOUND╲── NO ───────────┘
      ╲    ?    ╱
       ╲      ╱
        ╲   ╱
         ╲╱
          │ YES
          ▼
┌─────────────────────┐◄──────────┐
│    LOOKS   FOR      │           │
│     PACKET  ID      │           │
└─────────────────────┘           │
           │                      │
           ▼                      │
         ╱╲                       │
        ╱   ╲                     │
       ╱ HAS  ╲                   │
      ╱ PACKET ID╲                │
     ╱ BEEN ALREADY╲── YES ───────┘
     ╲  RECEIVED   ╱
      ╲     ?     ╱
       ╲        ╱
        ╲     ╱
          │ NO
          ▼
┌─────────────────────┐
│  STORES PACKET      │
│    IN BUFFER        │
└─────────────────────┘
           │
           ▼
┌─────────────────────┐
│  SENDS  PROGRAM     │
│   TO  RECEIVER      │
│   FOR  VIEWING      │
└─────────────────────┘
```

_FIG. 4._

FIG. 5.

EP 0 573 406 B1

EP 0 573 406 B1

FIG. 6.